(19) Europäisches Patentamt
European Patent Office
Office européen des brevets

(11) Numéro de publication: **0 161 191**
**B1**

# (12) FASCICULE DE BREVET EUROPEEN

(45) Date de publication du fascicule du brevet: **09.12.87**

(21) Numéro de dépôt: **85420036.7**

(22) Date de dépôt: **28.02.85**

(51) Int. Cl.⁴: **C 08 L 77/00,** C 08 K 5/09, C 08 K 5/13, C 08 K 5/00, C 08 K 3/28

(54) **Procédé de stabilisation de polyamides, les compositions stabilisantes utilisées pour la mise en oeuvre de ce procédé et les polyamides stabilisées obtenus.**

(30) Priorité: **08.03.84 FR 8403786**

(43) Date de publication de la demande: **13.11.85 Bulletin 85/46**

(45) Mention de la délivrance du brevet: **09.12.87 Bulletin 87/50**

(84) Etats contractants désignés: **AT BE CH DE FR GB IT LI LU NL SE**

(56) Documents cités:
**FR - A - 2 534 263**

**CHEMICAL ABSTRACTS, vol. 77, no. 12, 18 septembre 1972, page 48, no. 76126f, Columbus, Ohio, US**

(73) Titulaire: **RHONE-POULENC CHIMIE, 25, quai Paul Doumer, F-92408 Courbevoie Cédex (FR)**

(72) Inventeur: **Giroud-Abel, Bruno, 7, chemin de Charrière Blanche, Résid. du Parc des Cèdres F-69130 Ecully (FR)**

(74) Mandataire: **Trolliet, Maurice et al, RHONE-POULENC INTERSERVICES Service Brevets Chimie Centre de Recherches de Saint-Fons B.P. 62, F-69192 Saint-Fons Cédex (FR)**

EP 0 161 191 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un procédé de stabilisation des polyamides contre notamment leur dégradation par la chaleur ainsi que les compositions stabilisantes servant à la réalisation de la stabilisation et les compositions polymériques stabilisées obtenues.

Les polyamides à stabiliser visés dans la présente invention comprennent notamment: les polyamides obtenus par polycondensation de diacides carboxyliques aliphatiques saturés ayant de 6 à 12 atomes de carbone avec des diamines biprimaires aliphatiques saturées ayant de 6 à 12 atomes de carbone; les polyaminoacides obtenus soit par homopolycondensation directe d'acides ω-aminoalcanoïques comportant une chaîne hydrocarbonée ayant de 4 à 12 atomes de carbone, soit par ouverture hydrolytique et polymérisation des lactames dérivés de ces acides; les copolyamides obtenus à partir des monomères de départ des polyamides précités; et les mélanges de pareils polyamides.

A titre d'illustration des polyamides obtenus par polycondensation de diacides et de diamines, on citera par exemple: le nylon 6,6 (polymère d'hexaméthylènediamine et d'acide adipique), le nylon 6,9 (polymère d'hexaméthylènediamine et d'acide azélaïque), le nylon 6,10 (polymère d'hexaméthylènediamine et d'acide sébacique); le nylon 6,12 (polymère d'hexaméthylènediamine et d'acide dodécanedioïque).

A titre d'illustration des polyaminoacides qui peuvent convenir, on citera: le nylon 4 (polymère d'acide amino-4 butanoïque ou de γ-butyrolactame), le nylon 5 (polymère d'acide amino-5 pentanoïque ou de δ-amylolactame), le nylon 6 (polymère d'ε-caprolactame), le nylon 7 (polymère d'acide amino-7 heptanoïque), le nylon 8 (polymère de capryllactame), le nylon 9 (polymère d'acide amino-9 nonanoïque), le nylon 10 (polymère d'acide amino-10 décanoïque), le nylon 11 (polymère d'acide amino-11 undécanoïque), le nylon 12 (polymère d'acide amino-12 dodécanoïque ou de laurolactame).

A titre d'illustration des copolyamides, on citera par exemple: le nylon 6,6/6,10 (copolymère d'hexaméthylènediamine, d'acide adipique et d'acide sébacique), le nylon 6,6/6 (copolymère d'hexaméthylènediamine, d'acide adipique et de caprolactame).

Les polyamides à stabiliser qui sont visés de préférence dans la présente invention sont: le nylon 6,6, le nylon 6,10, le nylon 6, le nylon 6,6/6,10 et le nylon 6,6/6.

Les polyamides, notamment les nylons particuliers mentionnés dans le paragraphe précédent, constituent des matières de base dans l'industrie de transformation des matières plastiques. Au cours de leur transformation, les polyamides sont généralement exposés à des températures de l'ordre de 150°C à 300°C pendant les opérations de mélangeage et de formage. Au cours de leur utilisation, il est courant que les articles conformés obtenus soient soumis pendant une durée assez longue à des températures d'emploi de l'ordre de 100°C à 150°C. Or, lorsque les polyamides sont soumis à l'action de la chaleur, il intervient, à des degrés variables en fonction de l'atmosphère de traitement (inerte, oxydante), de la température de traitement, de la durée du traitement et de l'état du polymère (liquide, solide), un certain nombre de changements chimiques et physiques irréversibles qui se traduisent sur le plan pratique par l'apparition des inconvénients suivants: les polymères deviennent cassants, ils se colorent de façon inacceptable pour un certain nombre d'applications et on enregistre de plus une baisse des valeurs des propriétés mécaniques, en particulier des propriétés en traction et des valeurs de résilience. C'est pourquoi on ajoute en général des stabilisants à la chaleur aux polymères pour empêcher leur dégradation ou du moins pour la réduire dans une large mesure.

De nombreux systèmes stabilisants ont été proposés pour remédier aux inconvénients précités. Parmi ces stabilisants beaucoup d'entre eux procurent de bons résultats et sont couramment utilisés. C'est le cas notamment des halogénures cuivreux ou cuivriques pris seuls ou en mélange avec des halogénures de métaux alcalines; un stabilisant de cette nature qui convient particulièrement bien consistent dans les mélanges de CuI et de KI.

D'autres types de stabilisants sont constitués par: des composés aromatiques hydroxylés comme par exemple le di-tertiobutyl-2,6 p-crésol; des amines aromatiques comme par exemple la N,N'-diphényl-p-phénylènediamine; des composés organiques du phosphore comme par exemple le triphénylphosphite.

A propos des systèmes stabilisants pour polyamides, on pourra se reporter par exemple aux ouvrages: Encyclopedia of Chemical Technology, 1982, vol. 18, pages 334 à 337 et Encyclopedia of Polymer Science and Technology, 1969, vol. 10, page 464.

Cependant, malgré tout l'intérêt des stabilisants connus, les recherches continuent dans ce domaine car, selon les applications envisagées de polyamides, tel ou tel système stabilisant présente des inconvénients plus ou moins importants. Il est toujours intéressant pour les formulateurs de pouvoir disposer d'une vaste gamme de systèmes stabilisants, dans laquelle ils pourront choisir les composés possédant le plus d'avantages techniques ou économiques pour une application particulière.

Un des objets de la présente invention concerne un nouveau procédé de stabilisation des polyamides caractérisé par l'emploi conjoint de quantités efficaces d'au moins un composé à base de lanthanide et d'au moins un halogénure d'ammonium, de métaux alcalins ou de métaux alcalino-terreux.

Dans le présent texte on appellera lanthanide, les métaux de la classification périodique des éléments ayant les numéros atomiques allant de 57 à 71 ainsi que l'yttrium qui possède des propriétés voisines bien qu'ayant un numéro atomique de 39.

L'expression «composé à base de lanthanide» donnée ci-avant signifie:

— un dérivé organique ou inorganique de l'un quelconque des lanthanides: cérium, lanthane, praséodyme, néodyme, prométhium, samarium, europium, gadolinium, terbium, dysprosium, holmium, erbium, ytterbium, thulium, lutétium, et yttrium;

l'expression «au moins un composé à base de lanthanide» signifie alors que l'on peut engager, outre un seul dérivé, un mélange de dérivés organiques ou un mélange de dérivés inorganiques ou un mélange de dérivés organiques et inorganiques de l'un quelconques des lanthanides précités;

— un mélange de dérivés organiques et/ou inorganiques de plusieurs de ces lanthanides; l'expression «au moins un composé à base de lanthanide» signifie que l'on peut engager, outre un seul mélange, une association de plusieurs mélanges de ce type.

En général, en raison des quantités relatives des composés des divers lanthanides dans les minerais les plus courants, notamment dans la monazite et la bastnaesite, lorsque l'on met en œuvre un dérivé d'un seul lanthanide, ce dernier est de préférence le cérium, le lanthane, le praséodyme et le néodyme. Le cérium et le lanthane sont, parmi ces métaux, les plus abondants et conviennent tout particulièrement bien.

Des mélanges de dérivés de plusieurs lanthanides peuvent aussi être utilisés. Il peut en effet être avantageux de ne pas procéder à la séparation longue et coûteuse de tous les lanthanides présents en relativement faibles quantités dans les minerais couramment traités. En pareil cas, on fait appel généralement aux mélanges suivants:

— mélange de dérivés du cérium et d'un ou plusieurs des autres lanthanides;

— mélange de dérivés de lanthane et d'un ou plusieurs autres lanthanides choisi parmi le praséodyme, le néodyme, le prométhium, le samarium, l'europium, le gadolinium, le terbium, le dysprosium, l'holmium, l'erbium, l'ytterbium, le thulium, le lutétium et l'yttrium;

— mélange de dérivés du praséodyme et d'un ou plusieurs autres lanthanides choisi parmi le néodyme, le prométhium, le samarium, l'europium, le gadolinium, le terbium, le dysprosium, l'holmium, l'erbium, l'ytterbium, le thulium, le lutétium et l'yttrium;

— mélange de dérivés du néodyme et d'un ou plusieurs autres lanthanides choisi parmi le prométhium, le samarium, l'europium, le gadolinium, le terbium, le dysprosium, l'holmium, l'erbium, l'ytterbium, le thulium, le lutétium et l'yttrium.

Quand de tels mélanges de dérivés de plusieurs lanthanides sont mis en œuvre dans le procédé selon l'invention, le cérium et/ou le lanthane et/ou le praséodyme et/ou le néodyme représentent généralement au moins 40% en moles du total des lanthanides.

Par dérivé organique de lanthanide, on entend plus particulièrement les sels des divers acides carboxyliques, les dérivés métalliques des composés phénoliques, les mercaptides et les chélates des composés β-dicarbonylés.

Plus précisément, les dérivés organiques de lanthanides sont choisi parmi:

— les sels de lanthanide:

+ des acides aliphatiques monocarboxyliques ayant de 2 à 30 atomes de carbone ou dicarboxyliques ayant de 3 à 30 atomes de carbone, saturés ou comportant une ou plusieurs doubles liaisons éthylényques, et pouvant comporter 1 ou plusieurs substituants tels que les atomes d'halogènes, les groupements hydroxyles, les groupements alkoxy ayant de 1 à 12 atomes de carbone, les groupements mercapto, les groupements phényle, phénoxy, naphthyle ou cyclohexyle, dont les cycles sont éventuellement substitués par un ou plusieurs atomes d'halogènes, groupements hydroxyles, groupements alkyles ayant 1 à 6 atomes de carbone ou alkoxy ayant 1 à 6 atomes de carbone;

+ des acides benzoïque, naphthoïque-1, naphthoïque-2, cyclopentane-carboxylique, cyclohexane-carboxylique, cyclopentène-carboxyliques ou cyclohexène-carboxyliques, les parties cycliques de ces acides pouvant comporter un ou plusieurs substituants tels que les atomes d'halogènes, les groupements hydroxyles, les groupements alkyles ayant 1 à 12 atomes de carbone, alkényles ayant 2 à 12 atomes de carbone, alkoxy ayant 1 à 12 atomes de carbone, les groupements phényle, benzyle, phénoxy ou cyclohexyle, les groupements alkoxycarbonyles ayant 2 à 24 atomes de carbone ou alkénoxycarbonyles ayant 4 à 24 atomes de carbone;

+ des monoesters d'alkyle (le groupement alkyle ayant 1 à 24 atomes de carbone) ou d'alkényle (le groupement alkényle ayant 3 à 24 atomes de carbone) des acides aliphatiques dicarboxyliques indiqués précédemment;

+ des acides carboxyliques hétérocycliques notamment de ceux dérivés de la pyridine, du furanne, du thiophène, du pyrrole et du pyranne, pouvant comporter un ou plusieurs substituants tels que les atomes d'halogènes, les groupements hydroxyles, les groupements alkyles ayant 1 à 12 atomes de carbone, les groupements alkoxy ayant 1 à 12 atomes de carbone, les groupements alkényles ayant 2 à 12 atomes de carbone, les groupements alkoxycarbonyles ayant 2 à 24 atomes de carbone ou alkénoxycarbonyles ayant 4 à 24 atomes de carbone;

— les phénolates de lanthanide dérivés du phénol, du naphtol-1 ou du naphtol-2, dont les parties cycliques peuvent comporter un ou plusieurs substituants tels que les atomes d'halogènes, les groupements alkyles ou alkoxy ayant 1 à 24 atomes de carbone, alkényles ayant 2 à 24 atomes de carbone, phényle, benzyle, phénoxy ou cyclohexyle;

— les mercaptides de lanthanide notamment ceux qui dérivent des acides thioglycolique ou thiomalique et de leurs esters d'alkyle, (le radical alkyle ayant 1 à 12 atomes), d'alkényle (le radical alkényle ayant 2 à 12 atomes de carbone), de phényle, de benzyle, de cyclohexyle, d'alcanediol (ayant de 2 à 12 atomes de carbone), de dihydroxybenzène, de dihydroxycyclohexane, les parties cycliques desdits esters pouvant être substituées par un ou plusieurs radicaux alkyles ou alkoxy ayant de 1 à 6 atomes de carbone;

— les chélates de lanthanide de composés β-dicarbonylés notamment ceux qui dérivent des composés de formule générale (I):

$$R_1—CO—CHR_2—CO—R_3 \qquad (I)$$

dans laquelle:

— $R_1$ et $R_3$, identiques ou différents, représentent:

+ un groupement alkyle, linéaire ou ramifié, ayant 1 à 36 atomes de carbone, éventuellement substitué par un ou des atomes d'halogène,

+ un groupement alkényle, linéaire ou ramifié, ayant 3 à 36 atomes de carbone, éventuellement substitué par un ou des atomes d'halogènes,

+ un radical aryle ou un radical aryle portant sur le cycle aromatique un ou plusieurs substituants tels que:

. les radicaux alkyles ayant 1 à 6 atomes de carbone, éventuellement substitués par un ou des atomes d'halogènes,

. les radicaux alkényles ayant 2 à 6 atomes de carbone, éventuellement substitués par un ou des atomes d'halogènes,

. le groupement nitro,

. le groupement -CHO,

. le groupement -COOH,

. les groupements alkoxy ayant 1 à 6 atomes de carbone,

. les groupements -$COOR_4$, $R_4$ étant un radical alkyle ayant 1 à 12 atomes de carbone ou alkényle ayant 2 à 12 atomes de carbone,

. le groupement OH,

. les atomes d'halogènes,

+ un radical aralkyle dont la partie aliphatique comporte de 1 à 12 atomes de carbone et dont la partie cyclique peut comporter un ou plusieurs des substituants indiqués précédemment,

+ un radical cycloaliphatique comportant de 5 à 12 atomes de carbone et dont la partie cyclique peut comporter une ou plusieurs doubles liaisons carbone-carbone et porter un ou plusieurs des substituants indiqués précédemment,

+ un enchaînement de plusieurs des radicaux indiqués précédemment,

les différents radicaux aliphatiques précédemment définis pouvant comporter un ou plusieurs atomes d'oxygène -O- ou de soufre -S- ou groupements carbonyles -CO- ou carboxylates -COO-;

— $R_2$ représente un atome d'hydrogène.

Parmi les dérivés organiques de lanthanide qui peuvent être utilisés dans le procédé de stabilisation selon l'invention, on choisi fréquemment, en particulier pour des raisons pratiques ou pour des raisons économiques de disponibilité ou de prix:

— les sels de lanthanide:

+ des acides aliphatiques monocarboxyliques ayant de 6 à 24 atomes de carbone, saturés ou possédant une double liaison éthylénique, et pouvant comporter un ou plusieurs substituants tels que des atomes de chlore, groupements hydroxyles, groupements alkoxy ayant de 1 à 6 atomes de carbone, groupements phényle, phénoxy ou cyclohexyle, ces groupements cycliques étant éventuellement substitués par un ou plusieurs atomes de chlore, groupements hydroxyles, groupements alkyles ou alkoxy ayant 1 à 6 atomes de carbone;

+ des acides mercaptomonocarboxyliques ayant de 2 à 6 atomes de carbone ou mercaptodicarboxyliques ayant de 3 à 6 atomes de carbone;

+ des acides benzoïque ou cyclohexanecarboxylique, dont la partie cyclique peut comporter un ou plusieurs substituants tels qu'atomes de chlore, groupements hydroxyles, groupements alkyles ou alkoxy ayant 1 à 6 atomes de carbone ou groupements alkoxycarbonyles ayant 2 à 12 atomes de carbone;

+ des monoesters d'alkyle (le groupement alkyle ayant 1 à 12 atomes de carbone) des acides aliphatiques dicarboxyliques ayant 4 à 24 atomes de carbone, saturés ou possédant une double liaison éthylénique, et pouvant comporter un ou plusieurs substituants tels qu'atomes de chlore, groupements hydroxyles, groupements mercapto, groupements alkoxy ayant 1 à 6 atomes de carbone;

— les phénolates de lanthanide dérivés du phénol dont le cycle peut comporter un ou plusieurs substituants tels qu'atomes de chlore, groupements alkyles ou alkoxy ayant 1 à 12 atomes de carbone, groupements phényle, benzyle, phénoxy ou cyclohexyle.

A titre d'exemples non limitatifs de dérivés organiques des lanthanides on peut citer:

— les sels de lanthanide, notamment de cérium, de lanthane, de praséodyme et de néodyme, des acides propionique, hexanoïque, n.octanoïque, éthyl-2 hexanoïque, isooctanoïque, nonanoïque, décanoïque, laurique, stéarique, oléique, ricinoléïque, margarique, tétradécanoïques, hydroxy-12 stéarique, docosanoïques, docosène-13-oïque (acide érucique), chloro-2 décanoïque, octyl-2 décanoïque, hydroxy-2 hexanoïque, thioglycolique, mercaptopropionique, thiomalique, cyclohexyl-6 hexanoïque, benzoïque, phénylacétique, phényl-2 propanoïque, méthyl-2 benzoïque, méthyl-4 benzoïque, phénoxy-2 benzoïque, propyl-4 benzoïque, méthoxy-4 benzoïque, tertiobutyl-4 benzoïque, salicylique, tertiobutyl-5 salicylique, hydroxy-4 méthoxy-3 benzoïque, diméthoxy-3,4 benzoïque, naphtoïque-1, naphtoïque-2, cyclohexane-carboxylique, nicotinique, isonicotinique, méthyl-4 furanne-carboxylique-3, du maléate de monoisooctyle, du maléate de mono(éthoxy-2 éthyle), du phthalate de monobutyle, du thiomalate de monobutyle, du thiomalate de monohexyle;

— les phénolates de lanthanides, notamment de cérium, de lanthane, de praséodyme et de néodyme des composés phénoliques suivants: phénol, crésols, éthylphénols, xylénols, butylphénols, isopentylphénols, isooctylphénols, tertiononylphénols, décylphénols, dodécylphénols, tertiooctylphénols, cyclohexyl-4 phénol, phényl-4 phénol, ditertiononylphénols, méthyl-isohexylphénols;

— les chélates de lanthanides, notamment de cérium de lanthane, de praséodyme et de néodyme des β-dicétones suivantes: l'heptanedione-2,4; la décanedione-2,4; la méthyl-2 décène-2-dione-6,8; la méthyl-2 nonène-2 dione-6,8; la stéaroylacétone; la stéaroyl-1 octanone-2; le dioxo-7,9 décanoate d'éthyle; la benzoylacétone; l'acétylacétone; la benzoyl-1 octane-2; la diphényl-1,4 butane-dione-1,3; la stéaroylacétophénone; la palmitoyl-acétophénone; la benzoyl-1 méthyl-4 pentanone; le benzoyl-octacosanoyl-méthane; le paraméthoxy-benzoyl-stéaroylméthane; le dibenzoylméthane;

— les mercaptides de lanthanides, notamment de cérium, de lanthane, de praséodyme et de néodyme de l'acide thioglycolique, du thioglycolate

d'isooctyle, du thioglycolate d'octadécyle, du thioglycolate de benzyle, du thioglycolate de lauryle, du dithioglycolate de cyclohexanediol-1,4, du thioglycolate de tertiobutyl-4 cyclohexyle, de l'acide thiomalique, du thiomalate d'hexyle, du thiomalate d'éthyl-2 hexyle, du thiomalate de dodécyle, du thiomalate de benzyle, du thiomalate de cyclohexyle, du thiomalate de propanediol-1,3, du thiomalate de butanediol-1,4, du thiomalate d'hexanediol-1,6.

Les dérivés organiques des lanthanides, qui ne sont pas directement disponibles, sont préparés par des méthodes classiques, telles que la réaction d'un acide carboxylique ou de son anhydride, d'un composé phénolique, d'un acide mercaptocarboxylique (ou d'un de ses esters) ou d'une β-dicétone sur un oxyde ou un hydroxyde de lanthanide, ou selon le cas sur un mélange de tels oxydes ou hydroxydes, dans un milieu solvant approprié et en chauffant si nécessaire.

Par dérivé inorganique de lanthanide, on entend plus particulièrement les oxydes, les hydroxydes, les sels d'hydracides minéraux et les sels d'oxacides minéraux.

Plus précisément, on utilise par exemple comme sels de lanthanide d'hydracides mineraux: les chlorure, bromure, iodure, sulfure, séléniure et tellulure; comme sels de lanthanide d'oxyacides minéraux: les sulfite, sulfate, sulfonate, nitrite, nitrate, phosphite, phosphate, pyrophosphate, carbonate, perchlorate, antimoniate, arséniate, sélenite, sélenate, vanadate et tungstate.

Parmi des dérivés inorganiques de lanthanide qui peuvent être utilisés dans le procédé de stabilisation selon l'invention, on choisit fréquemment, en particulier pour des raisons pratiques ou pour des raisons économiques de disponibilité ou de prix, les oxydes, les chlorures, les sulfates ou les nitrates de lanthanide.

Dans les dérivés de lanthanide utilisés dans le procédé selon l'invention, le lanthanide peut se trouver aux différents degrés d'oxydation qu'il possède éventuellement; le plus fréquemment il se trouve aux degrés d'oxydation III ou IV.

S'agissant de l'halogénure d'ammonium de métaux alcalins ou de métaux alcalino-terreux qui est utilisé conjointement avec le composé à base de lanthanide, on employe généralement un chlorure, un bromure ou un iodure. Outre l'ion $NH_4^+$, la partie cationique représente généralement des cations dérivés du sodium, du potassium, du magnésium, du calcium, du strontium ou du baryum.

Conformément à une mise en œuvre très préférentielle du procédé selon l'invention, on utilise conjointement des quantités efficaces:

— d'au moins un composé à base de lanthanide choisi parmi le stéarate de lanthane III, l'oxyde de lanthane III, le chlorure de lanthane III, le stéarate de cérium III, l'oxyde de cérium IV, le chlorure de cérium III,

— et d'au moins un halogénure d'ammonium, de métaux alcalins ou de métaux alcalino-terreux choisi parmi le chlorure, le bromure ou l'iodure d'ammonium, de sodium ou de potassium.

La quantité de composé(s) à base de lanthanide mise en œuvre peut varier dans de très larges limites en fonction du degré de stabilisation souhaité et selon les divers additifs qui peuvent être éventuellement incorporés dans le polymère.

Plus précisement, cette quantité est déterminée de manière à ce que le composé à base de lanthanide apporte de $0,1 \cdot 10^{-4}$ à $10 \cdot 10^{-4}$ atome-grammes de métal appartenant au groupe des lanthanides pour 100 g de polyamide. De préférence, cette quantité est déterminée de manière à apporter de $1 \cdot 10^{-4}$ à $5 \cdot 10^{-4}$ atome-grammes de métal du groupe des lanthanides pour 100 g de polyamide.

La quantité d'halogénure(s) d'ammonium, de métaux alcalins ou de métaux alcalino-terreux que l'on utilise dans le procédé selon l'invention peut également varier largement.

Plus précisement, cette quantité est déterminée de manière à ce que le rapport:

$$\frac{\text{nombre total d'atome-grammes d'halogène}}{\text{nombre d'atome-grammes de métal du groupe des lanthanides}}$$

varie de 1 à 20 et, de préférence, de 5 à 10.

Par l'expression «nombre total d'atome-grammes d'halogène» on entend signifier le nombre d'atomes-grammes d'halogène provenant de l'halogénure d'ammonium, de métaux alcalins ou de métaux alcalino-terreux mis en œuvre auquel s'ajoute éventuellement le nombre d'atome-grammes d'halogène provenant le cas échéant du composé à base de lanthanide mis en œuvre.

Le ou les composé(s) à base de lanthanide et le (ou les) halogénure(s) d'ammonium, de métaux alcalins ou de métaux alcalino-terreux peuvent être incorporés au polymère en même temps qu'un ou plusieurs additifs tels que notamment des charges, des agents renforçateurs de résistance au choc, des lubrifiants, des plastifiants, des pigments, des agents mouillants, des agents antistatiques, des agents de cristallisation.

Le (ou les) composé(s) à base de lanthanide et le (ou les) halogénure(s) d'ammonium, de métaux alcalins ou de métaux alcalino-terreux peuvent également être préalablement mélangés entre eux afin de constituer des compositions stabilisantes. De telles compositions stabilisantes, servant à la stabilisation du procédé selon l'invention, constituent un autre objet de l'invention.

De manière habituelle, l'incorporation dans le polyamide soit des constituants séparés des compositions stabilisantes, soit des compositions stabilisantes elle-mêmes préformées (incorporation effectuée éventuellement en même temps que celle de tout ou partie des divers additifs précités) est faite en appliquant les méthodes usuelles connues pour réaliser un mélange homogène des divers ingrédients. De manière préférentielle, on réalise le mélange des divers constituants sous forme de poudre ou de granulés en opérant d'abord à froid un pré-mélange dans un mélangeur classique, puis en homogénéisant ensuite l'ensemble par un malaxage à chaud dans une extrudeuse à une ou plusieurs vis. A l'issue de ce traitement on obtient des joncs qui sont refroidis à l'eau puis découpés en granulés, ces derniers pouvant éventuellement être soumis ensuite à un séchage. Les compositions polymériques stabilisées obtenues peuvent être utilisées ainsi à l'état de granulés par le transformateur.

Les compositions de polyamide stabilisé par le procédé selon l'invention peuvent être utilisées pour le formage des articles souhaités en opérant avec les appareils classiques de moulage par injection ou par extrusion.

Les polyamides stabilisés par le système composé(s) à base de lanthanide + halogénure(s) d'ammonium, de métaux alcalins ou de métaux alcalino-terreux, présentent une thermo-stabilité comparable à celle obtenue à l'aide du meilleur système de l'art antérieur à base de CuI + KI. Par ailleurs, on a constaté que l'emploi de composé(s) à base de lanthanide permet de contrôler et de limiter efficacement l'évolution des caractéristiques moléculaires du polyamide lors de l'injection ou de l'extrusion. Cette évolution est plus ou moins importante selon la balance des groupements terminaux du polyamide, la teneur en humidité résiduelle, la température de la masse fondue lors de la transformation, la durée de la transformation, la nature et le taux des additifs présents et elle entraîne une modification des caractéristiques rhéologiques du polymère qui peut être indésirable pour réaliser un moulage souple et régulier et pour obtenir des articles d'aspect correct et de qualité optimale. Les objets conformés préparés à l'aide des polyamides stabilisés selon le procédé de l'invention présentent justement un aspect de surface de qualité optimale qui concrétise cette activité particulière des composés à base de lanthanide.

Précédemment, à propos des additifs qui peuvent être utilisés, on a parlé notamment de charges et d'agents renforçateurs de résistance au choc.

S'agissant des charges, les produits qui conviennent bien en général consistent dans les fibres de verre, les fibres d'amiante, les microbilles de verre, du kaolin, du talc, de la silice, du mica, des bentonites, des bentones ou des mélanges de de ces espèces. Ces charges peuvent être utilisées dans l'état où elles se trouvent ou après avoir subi un traitement de leurs surfaces permettant une meilleure compatibilité et/ou adhésion avec la matrice polyamide. L'agent de traitement de surfaces, comme par exemple des composés aminosilaniques, peut aussi être introduit au moment de l'homogénéisation du polyamide avec les divers ingrédients mis en œuvre. Parmi ces charges, les plus couramment utilisées sont les fibres de verre. Ces fibres ont en général un diamètre moyen compris entre 1 et 15 µm et une longueur comprise entre 2 et 8 mm. Il est avantageux, pour obtenir des articles doués de propriétés mécaniques optimales, d'utiliser des fibres ensimées par exemple au moyen de résines époxy, polyester, polyuréthanes ou de polymères vinyliques. Les proportions de charges peuvent varier entre par exemple 20 et 50% en poids par rapport au poids de la matrice polyamide.

S'agissant des agents renforçateurs de chocs, notamment à des températures aussi basses que celles allant de 0° à –40°C, les produits qui conviennent bien consistent dans des copolymères dérivant d'au moins une oléfine et d'au moins un autre monomère copolymérisable et comportant des groupes carboxyles et/ou carboxylates.

Plus précisément on peut faire appel dans ce contexte:

. à des copolymères oléfiniques dérivant d'une α-oléfine aliphatique comportant de 2 à 6 atomes de carbone (par exemple: ethylène, propylène, butène-1, pentène-1, hexène-1) et d'au moins un composé appartenant à la classe des mono-ou diacides carboxyliques α,β-insaturés comportant de 3 à 8 atomes de carbones (par exemple: acide acrylique, acide méthacrylique, acide maléique, acide fumarique, acide itaconique, acide vinylbenzoïque), les esters d'alkyles inférieurs et les anhydrides dérivés de ces acides; des copolymères qui conviennent bien sont par exemple: les copolymères éthylène-acide acrylique, ethylène-acide méthacrylique, éthylène-acide acrylique-méthacrylate de méthyle;

. à des copolymères oléfiniques contenant des groupes carboxyles et/ou carboxylates et dérivant d'éthylène et d'au moins une α-oléfine ayant de 3 à 6 atomes de carbone. Comme α-oléfine ayant de 3 à 6 atomes de carbone, on utilise de préférence le propylène, cependant une autre α-oléfine de ce type, notamment le butène-1, le pentène-1 et l'hexène-1, peut être choisie à la place ou en addition au propylène.

L'introduction des groupes carboxyles et/ou carboxylates peut être faite: soit par copolymérisation directe du mélange éthylène-α-oléfine ayant de 3 à 6 atomes de carbone avec au moins un composé insaturé appartenant à la classe des diacides carboxyliques α,β-insaturés comportant de 4 à 8 atomes de carbone (acide maléique, acide fumarique, acide itaconique), les esters d'alkyles inférieurs et les anhydrides dérivés de ces acides; soit par greffage du (ou des) composé(s) acide(s) (acide et/ou dérivé) sur la base oléfinique, induit par ionisation, par hydroperoxydation ou sous l'effet de la chaleur et de la pression. Des copolymères qui conviennent bien sont par exemple: les copolymères éthylène-propylène greffé anhydride maléique, éthylène-propylène greffé acide fumarique;

. à des copolymères contenant des groupes carboxyles et/ou carboxylates et dérivant d'éthylène, d'au moins une α-oléfine ayant de 3 à 6 atomes de carbone et d'au moins un diène non conjugué. De préférence on utilise ici à nouveau, comme α-oléfine ayant de 3 à 6 atomes de carbone le propylène. Le diène non conjugué consiste habituellement dans un diène aliphatique comportant au moins 6 atomes de carbone qui possède une double liaison terminale et une double liaison interne; de préférence on utilise ici l'hexadiène-1,4. L'introduction des groupes carboxyles et/ou carboxylates est faite en traitant le mélange éthylène-α-oléfine-diène comme indiqué ci-avant dans le cas du mélange éthylène-α-oléfine. Des copolymères qui conviennent bien sont par exemple: les copolymères éthylène-propylène-hexadiène-1,4 greffé anhydride maléique et éthylène-propylène-hexadiène-1,4 greffé acide fumarique.

Les quantités de copolymères fonctionnalisés à mettre en œuvre éventuellement représent habituellement 2% à 60% du poids de la matrice polyamidique.

Les exemples non limitatifs suivants montrent comment la présente invention peut être mise en œuvre pratiquement.

EXEMPLES 1 A 3 ET ESSAIS COMPARATIFS A à E

*1. Contenu de ces exemples et essais:*

. Essai témoin A: on prépare une composition à partir de: 100 parties en poids de nylon 6,6 + 0,1 partie en poids de cémulsol J + 0,25 partie en poids de cire-ester. Le nylon 6,6 (polymère d'hexaméthylènediamine et d'acide adipique) mis en œuvre est un produit commercialisé par RHONE-POULENC SPECIALITES CHIMIQUES sous la marque TECHNYL A 200 et présentant un indice de viscosité de 138 ml/g (déterminé, selon la norme ISO R 307, édition de 1077, sur la partie soluble dans l'acide formique à 90% en poids). Le cémulsol J est un agent mouillant commercialisé par la Société SFOS (l'expression cémulsol J étant une marque). La cire-ester est un agent lubrifiant commercialisée par la Société LA CERESINE sous la marque LACER V8/D; ce produit présente un point de fusion de 69 à 72°C et est issu de l'acide béhénique et/ou de l'acide montanique.

. Exemples 1 à 3 et essais comparatifs B à E: à la composition de l'essai A précédent, on ajoute les divers stabilisants indiqués dans le tableau 1 ci-après. Les quantités de stabilisants sont données en parties en poids de produit sec et pur; les quantités mises en œuvre sont déterminées de telle sorte que:

— le nombre d'atome-grammes de métal du groupe des lanthanides (ou de cuivre pour l'essai C) présents pour 100 g de polyamide est d'environ $3{,}41.10^{-4}$,

— lorsqu'il y a association avec un halogénure de métal alcalin, le rapport du nombre total d'atome-grammes d'halogène sur le nombre d'atome-grammes de métal du groupe des lanthanides (ou de cuivre pour l'essai C) est constant et égal à environ 7,1.

TABLEAU 1

| Exemple/essai<br>Stabilisants | A | 1 | B | C | 2 | D | 3 | E |
|---|---|---|---|---|---|---|---|---|
| Stéarate de Lanthane III<br>La $(C_{17}H_{35}COO)_3$ | 0 | 0,337 | 0,337 | 0 | 0 | 0 | 0 | 0 |
| Stéarate de Cérium III<br>Ce $(_{17}H_{35}COO)_3$ | 0 | 0 | 0 | 0 | 0,338 | 0,338 | 0 | 0 |
| Chlorure de Cérium III<br>Ce $Cl_3$ | 0 | 0 | 0 | 0 | 0 | 0 | 0,084 | 0,084 |
| Iodure de cuivre<br>CuI | 0 | 0 | 0 | 0,065 | 0 | 0 | 0 | 0 |
| Iodure de potassium<br>KI | 0 | 0,404 | 0 | 0,350 | 0,404 | 0 | 0,234 | 0 |

*2. Mode opératoire général et contrôles effectués:*

Les compositions sont préparées de la manière suivante:

Dans un mélangeur de marque MORITZ, on réalise tout d'abord le mouillage des granulés de nylon 6,6 par le cémulsol J, puis on ajoute ensuite la cire-ester et les divers stabilisants propres à chaque composition et on termine le pré-mélange à sec dans le mélangeur MORITZ.

Ce pré-mélange est ensuite malaxé à l'état fondu dans une extrudeuse-dégazeuse de marque TROESTER comportant une vis de diamètre D égale à 45 mm et de longueur égale à 28D; la vis utilisée est une vis cylindro-conique ayant un profil adapté pour le travail des polyamides; l'extrudeuse est équipée par ailleur d'une filière à un trou de 3,5 mm de diamètre; les conditions de l'extrusion sont les suivantes:

- températures : entrée : 255°C; milieu: 290°C; filière: 260°C
- vide: 931 · $12^2$ Pa
- vitesse de la vis: 90 t/min
- débit matière: entre 9 et 11 kg/h.

Le produit recueilli sous forme de joncs est refroidi par passage dans un bain d'eau froide, puis il est granulé et séché.

A partir de la poudre à mouler ainsi obtenue, on prépare des éprouvettes de forme haltère ayant une épaisseur de 1 mm, une largeur de 4 mm et une longueur calibrée (longueur sur laquelle sont effectuées les mesures) de 50 mm. Le moulage des éprouvettes est effectué à l'aide d'une presse à vis de marque DK, type 60. Dans cette presse, les granulés de la poudre à mouler sont fondus à une température de 280°C, tandis que le moule est maintenu à une température de 80°C; la pression matière d'injection est de 70 MPa; la durée du cycle d'injection est de 22 s.

On mesure ensuite les propriétés en traction (contrainte au seuil d'écoulement et allongement à la rupture) de ces éprouvettes moulées sur un dynamomètre INSTRON, la température de mesure étant de 23°C, la vitesse de traction étant de 50 mm/min; on mesure les propriétés initiales à EHO sur les éprouvettes brutes de moulage et on mesure ces propriétés après un séjour de 240 h à 120°C dans un four à air ventilé.

*3. Résultats des exemples 1 à 3 et des essais A à E:*

Les résultats obtenus sont rassemblés dans le tableau 2 donné ci-après:

TABLEAU 2

| Exemple/Essai | PROPRIETES EN TRACTION | | | |
|---|---|---|---|---|
| | Contrainte au seuil d'écoulement en MPa | | Allongement à la rupture en % de la longueur initiale | |
| | Initiale | Après 240 h à 120°C | Initial | Après 240 h à 120°C |
| Essai A | 78 | 44 | 175 | 3 |
| Exemple 1 | 81 | 81 | 96 | 20 |
| Essai B | 80 | 18 (R) | 86 | 1 |
| Essai C | 83 | 81 | 105 | 43 |
| Exemple 2 | 84 | 79 | 71 | 12 |
| Essai D | 80 | 16 (R) | 101 | 0,8 |
| Exemple 3 | 80 | 80 | 96 | 13,5 |
| Essai E | 81 | 20 (R) | 61 | 1,3 |

Dans le tableau 2, le symbole (R) signifie qu'il y a rupture des éprouvettes: on mesure alors immédiatement dans des conditions la contrainte à la rupture. Dans ce tableau, on peut observer également, en matière d'allongement à la rupture, une différence importante entre la valeur initiale correspondant à la composition témoin (essai A) et les valeurs initiales (plus faibles) correspondant aux autres compositions; l'explication de cette différence est la suivante: il intervient dans les exemples 1 à 3 et les essais B à E un effet de nucléation lié à l'ajout des stabilisants; le taux de cristallisation et la morphologie cristalline sont par voie de conséquence modifiés et cela entraîne la diminution observée de l'allongement à la rupture initial (ce phénomène est bien connu de l'homme de l'art).

**Revendications**

1. Procédé de stabilisation des polyamides caractérisé par l'emploi conjoint de quantités efficaces d'au moins un composé à base de lanthanide et d'au moins un halogénure d'ammonium, de métaux alcalins ou de métaux alcalino-terreux (on appelle lanthanide, les métaux de la classification périodique des éléments ayant les numéros atomiques allant de 57 à 71 ainsi que l'yttrium).

2. Procédé selon la revendication 1, caractérisé en ce que le composé à base de lanthanide consiste dans:

— un dérivé organique ou inorganique de l'un quelconque des lanthanides: cérium, lanthane, praséodyme, néodyme, prométhium, samarium, europium, gadolinium, terbium, dysprosium, holmium, erbium, ytterbium, thulium, lutétium, et yttrium;

— ou un mélange de dérivés organiques et/ou inorganiques de plusieurs de ces lanthanides.

3. Procédé selon la revendication 2, caractérisé en ce que lorsque l'on considère un dérivé d'un seul lanthanide, ce dernier est le cérium, le lanthane, le praséodyme ou le néodyme.

4. Procédé selon la revendication 2, caractérisé en ce que lorsque l'on considère un mélange de dérivés de plusieurs lanthanides, ce dernier consiste dans les espèces suivantes:

— mélange de dérivés du cérium et d'un ou plusieurs des autres lanthanides;

— mélange de dérivés de lanthane et d'un ou plusieurs autres lanthanides choisi parmi le praséodyme, le néodyme, le prométhium, le samarium, l'europium, le gadolinium, le terbium, le dysprosium, l'holmium, l'erbium, l'ytterbium, le thulium, le lutétium et l'yttrium;

— mélange de dérivés du praséodyme et d'un ou plusieurs autres lanthanides choisis parmi le néodyme, le prométhium, le samarium, l'europium, le gadolinium, le terbium, le dysprosium, l'holmium, l'erbium, l'ytterbium, le thulium, le lutétium et l'yttrium;

— ou mélange de dérivés du néodyme et d'un ou plusieurs autres lanthanides choisis parmi le prométhium, le samarium, l'europium, le gadolinium, le terbium, le dysprosium, l'holmium, l'erbium, l'ytterbium, le thulium, le lutétium et l'yttrium.

5. Procédé selon la revendication 4, caractérisé en ce que le cérium et/ou le lanthane et/ou le praséodyme et/ou le néodyme représentent au moins 40% en moles du total des lanthanides.

6. Procédé selon l'une quelconque des revendications 2 à 5, caractérisé en ce que les dérivés organiques de lanthanide sont choisis parmi:

— les sels de lanthanide:

+ des acides aliphatiques monocarboxyliques ayant de 2 à 30 atomes de carbone ou dicarboxyliques ayant de 3 à 30 atomes de carbone, saturés ou comportant une ou plusieurs doubles liaisons éthyléniques, et pouvant comporter 1 ou plusieurs substituants tels que les atomes d'halogènes, les groupements hydroxyles, les groupements alkoxy ayant de 1 à 12 atomes de carbone, les groupements mercapto, les groupements phényle, phénoxy, naphthyle ou cyclohexyle, dont les cycles sont éventuellement substitués par un ou plusieurs atomes d'halogènes, groupements hydroxyles, groupements alkyles ayant 1 à 6 atomes de carbone ou alkoxy ayant 1 à 6 atomes de carbone;

+ des acides benzoïque, naphtoïque-1, naphtoïque-2, cyclopentane-carboxylique, cyclohexane-carboxylique, cyclopentène-carboxyliques ou cyclohexène-carboxyliques, les parties cycliques de ces acides pouvant comporter un ou plusieurs substituants tels que les atomes d'halogènes, les groupements hydroxyles, les groupements alkyles ayant 1 à 12 atomes de carbone, alkényles ayant 2 à 12 atomes de carbone, alkoxy ayant 1 à 12 atomes de carbone, les groupements phényle, benzyle, phénoxy ou cyclohexyle, les groupements alkoxycarbonyles ayant 2 à 24 atomes de carbone ou alkénoxycarbonyles ayant 4 à 24 atomes de carbone;

+ des monoesters d'alkyle (le groupement alkyle ayant 1 à 24 atomes de carbone) ou d'alkényle (le groupement alkényle ayant 3 à 24 atomes de carbone) des acides aliphatiques dicarboxyliques indiqués précédemment;

+ des acides carboxyliques hétérocycliques notamment de ceux dérivés de la pyridine, du furanne, du thiophène, du pyrrole et du pyrane, pouvant comporter un ou plusieurs substituants tels que les atomes d'halogènes, les groupements hydroxyles, les groupements alkyles ayant 1 à 12 atomes de carbone, les groupements alkoxy ayant 1 à 12 atomes de carbone, les groupements alkényles ayant 2 à 12 atomes de carbone, les groupements alkoxycarbonyles ayant 2 à 24 atomes de carbone ou alkénoxycarbonyles ayant 4 à 24 atomes de carbone;

— les phénolats de lanthanide dérivés du phénol, du naphthol-1 ou de naphthol-2, dont les parties cycliques peuvent comporter un ou plusieurs substituants tels que les atomes d'halogènes, les groupements alkyles ou alkoxy ayant 1 à 24 atomes de carbone, alkényles ayant 2 à 24 atomes de carbone, phényle, benzyle, phénoxy ou cyclohexyle;

— les mercaptides de lanthanide notamment ceux qui dérivent des acides thioglycolique ou thiomalique et de leurs esters d'alkyle, (le radical alkyle ayant 1 à 12 atomes), d'alkényle (le radical alkényle ayant 2 à 12 atomes de carbone), de phényle, de benzyle, de cyclohexyle, d'alcanediol (ayant de 2 à 12 atomes de carbone), de dihydroxybenzène, de dihydroxycyclohexane, les parties cycliques desdits esters pouvant être substituées par un ou plusieurs radicaux alkyles ou alkoxy ayant de 1 à 6 atomes de carbone;

— les chélates de lanthanide de composés β-dicarbonylés notamment ceux qui dérivent des composés de formule générale (I):

$$R_1—CO—CHR_2—CO—R_3 \quad (I)$$

dans laquelle:

— $R_1$ et $R_3$, identiques ou différents, représentent:

+ un groupement alkyle, linéaire ou ramifié, ayant 1 à 36 atomes de carbone, éventuellement substitué par un ou des atomes d'halogène,

+ un groupement alkényle, linéaire ou ramifié, ayant 3 à 36 atomes de carbone, éventuellement substitué par un ou des atomes d'halogènes,

+ un radical aryle ou un radical aryle portant sur le cycle aromatique un ou plusieurs substituants tels que:

. les radicaux alkyles ayant 1 à 6 atomes de carbone, éventuellement substitués par un ou des atomes d'halogènes,

. les radicaux alkényles ayant 2 à 6 atomes de carbone, éventuellement substitués par un ou des atomes d'halogènes,

. le groupement nitro,

. le groupement -CHO,

. le groupement -COOH,

. les groupements alkoxy ayant 1 à 6 atomes de carbone,

. les groupements $-COOR_4$, $R_4$ étant un radical alkyle ayant 1 à 12 atomes de carbone ou alkényle ayant 2 à 12 atomes de carbone,

. le groupement OH,

. les atomes d'halogènes,

+ un radical aralkyle dont la partie aliphatique comporte de 1 à 12 atomes de carbone et dont la partie cyclique peut comporter un ou plusieurs des substituants indiqués précédemment,

+ un radical cycloaliphatique comportant de 5 à 12 atomes de carbone et dont la partie cyclique peut comporter une ou plusieurs doubles liaisons carbone-carbone et porter un ou plusieurs des substituants indiqués précédemment,

+ un enchaînement de plusieurs des radicaux indiqués précédemment,

les différents radicaux aliphatiques précédemment définis pouvant comporter un ou plusieurs atomes d'oxygène -O- ou de soufre -S- ou groupements carbonyles -CO- ou carboxylates -COO-;

— $R_2$ représente un atome d'hydrogène.

7. Procédé selon la revendication 6, caractérisé en ce que les dérivés organiques de lanthanide sont choisi parmi:

— les sels de lanthanide:

+ des acides aliphatiques monocarboxyliques ayant de 6 à 24 atomes de carbone, saturés ou possédant une double liaison éthylénique, et pouvant comporter un ou plusieurs substituants tels que des atomes de chlore, groupements hydroxyles, groupements alkoxy ayant de 1 à 6 atomes de carbone, groupements phényle, phénoxy ou cyclohexyle, ces groupements cycliques étant éventuellement substitués par un ou plusieurs atomes de chlore, groupements hydroxyles, groupements alkyles ou alkoxy ayant 1 à 6 atomes de carbone;

+ des acides mercaptomonocarboxyliques ayant

de 2 à 6 atomes de carbone ou mercaptodicarboxyliques ayant de 3 à 6 atomes de carbone;

+ des acides benzoïque ou cyclohexanecarboxylique, dont la partie cyclique peut comporter un ou plusieurs substituants tels qu'atomes de chlore, groupements hydroxyles, groupements alkyles ou alkoxy ayant 1 à 6 atomes de carbone ou groupements alkoxycarbonyles ayant 2 à 12 atomes de carbone;

+ des monoesters d'alkyle (le groupement alkyle ayant 1 à 12 atomes de carbone) des acides aliphatiques dicarboxyliques ayant 4 à 24 atomes de carbone, saturés ou possédant une double liaison éthylénique, et pouvant comporter un ou plusieurs substituants tels qu'atomes de chlore, groupements hydroxyles, groupements mercapto, groupements alkoxy ayant 1 à 6 atomes de carbone;

— les phénolates de lanthanide dérivés du phénol dont le cycle peut comporter un ou plusieurs substituants tels qu'atomes de chlore, groupements alkyles ou alkoxy ayant 1 à 12 atomes de carbone, groupements phényle, benzyle, phénoxy ou cyclohexyle.

8. Procédé selon l'une quelconque des revendications 2 à 5, caractérisé en ce que les dérivés inorganiques de lanthanide sont choisi parmi les oxydes, les hydroxydes, les sels d'hydracides minéraux et les sels d'oxyacides minéraux de lanthanide.

9. Procédé selon la revendication 8, caractérisé en ce que l'on utilise comme sels de lanthanide d'hydracides mineraux: les chlorure, bromure, iodure, sulfure, séléniure et tellurure; comme sels de lanthanide d'oxyacides minéraux: les sulfite, sulfate, sulfonate, nitrite, nitrate, phosphite, phosphate, pyrophosphate, carbonate, perchlorate, antimoniate, arséniate, sélenite, sélenate, vanadate et tungstate.

10. Procédé selon l'une quelconque des revendications 1 à 9, caractérisé en ce que l'on utilise, conjointement avec le composé à base de lanthanide, au moins un halogénure d'ammonium, de métaux alcalins ou de métaux alcalino-terreux choisi parmi le chlorure, le bromure ou l'iodure d'ammonium, de sodium, de potassium, de magnésium, de calcium, de strontium ou de baryum.

11. Procédé selon l'une quelconque des revendications 1 à 10, caractérisé en ce que l'on utilise conjointement des quantités efficaces:

— d'au moins un composé à base de lanthanide choisi parmi le stéarate de lanthane III, l'oxyde de lanthane III, le chlorure de lanthane III, le stéarate de cérium III, l'oxyde de cérium IV, le chlorure de cérium III,

— et d'au moins un halogénure d'ammonium, de métaux alcalins ou de métaux alcalino-terreux choisi parmi le chlorure, le bromure ou l'iodure d'ammonium, de sodium où de potassium.

12. Procédé selon l'une quelconque des revendications 1 à 11, caractérisé en ce que:

— d'une part, la quantité de composé(s) à base de lanthanide mise en œuvre est déterminée de manière à apporter de $0,1 \cdot 0^{-4}$ à $10 \cdot 10^{-4}$ et, de préférence, de $1 \cdot 10^{-4}$ à $5 \cdot 10^{-4}$ atome-grammes de métal appartenant au groupe des lantanides pour 100 g de polyamide;

— et d'autre part, la quantité d'halogénure(s) d'ammonium, de métaux alcalins ou de métaux alcalino-terreux mise en œuvre est déterminée de manière à ce que le rapport:

$$\frac{\text{nombre total d'atome-grammes d'halogène}}{\text{nombre d'atome-grammes de métal du groupe des lanthanides}}$$

varie de 1 à 20 et, de préférence, de 5 à 10.

13. Procédé selon l'une quelconque des revendications 1 à 12, caractérisé en ce que le polyamide à stabiliser est choisi dans le groupe constitué par: les polyamides obtenus par polycondensation de diacides carboxyliques aliphatiques saturés ayant de 6 à 12 atomes de carbone avec des diamines biprimaires aliphatiques saturées ayant de 6 à 12 atomes de carbone; les polyaminoacides obtenus soit par homopolycondensation directe d'acides ω-aminoalcanoïques comportant une chaîne hydrocarbonée ayant de 4 à 12 atomes de carbone, soit par ouverture hydrolytique et polymérisation des lactames dérivés de ces acides; les copolyamides obtenus à partir des monomères de départ des polyamides précités; et les mélanges de pareils polyamides.

14. Composition stabilisantes pour la mise en œuvre du procédé selon l'une quelconque des revendications 1 à 13, caractérisées en ce qu'elles comportent:

— au moins un composé à base de lanthanide tel que défini dans les revendications 2 à 9, 11 et 12,

— et au moins un halogénure d'ammonium, de métaux alcalins ou de métaux alcalino-terreux tel que défini dans les revendications 10 à 12.

15. Polyamide, tel que défini dans la revendication 13, stabilisé par le procédé selon l'une quelconque des revendications 1 à 12.

16. Polyamides stabilisés selon la revendication 15, caractérisés en ce qu'ils renferment en outre un ou plusieurs additifs choisi parmi des charges, des agents renforçateurs de résistance au choc, des lubrifiants, des plastifiants, des pigments, des agents mouillants, des agents antistatiques, des agents de cristallisation.

17. Objets conformés préparé à l'aide des polyamides stabilisé selon les revendications 15 où 16.

**Patentansprüche**

1. Verfahren zur Stabilisation von Polyamiden, gekennzeichnet durch die gemeinsame Verwendung wirksamer Mengen mindestens einer Verbindung auf Lanthanid-Basis und mindestens einem Ammonium-, Alkalimetall- oder Erdalkalimetallhalogenid (man bezeichnet als Lanthanid die Metalle der Klassifikation des Periodensystems der Elemente mit den Atomnummern von 57 bis 71 sowie das Yttrium).

2. Verfahren nach Anspruch 1, dadurch gekennzeichnet, dass die Verbindung auf Lanthanid-Basis besteht in:

— einem organischen oder anorganischen Derivat irgendeines der Lanthanide: Cer, Lanthan, Praseodym, Neodym, Promethium, Samarium, Europium, Gadolinium, Terbium, Dysprosium, Holmium, Erbium, Ytterbium, Thulium, Lutetium und Yttrium;

— oder einem Gemisch organischer und/oder anorganischer Derivate mehrerer dieser Lanthanide.

3. Verfahren gemäss Anspruch 2, dadurch gekennzeichnet, dass, wenn man ein Derivat eines einzigen Lanthanids in Betracht zieht, dieses letztere das Cer, Lanthan, Praseodym oder Neodym ist.

4. Verfahren gemäss Anspruch 2, dadurch gekennzeichnet, dass man, wenn man ein Gemisch von Derivaten mehrerer Lanthanide in Betracht zieht, dieses letztere in den folgenden Gattungen besteht:

— Gemisch von Derivaten des Cers und einem oder mehreren der anderen Lanthanide;

— Gemisch von Lanthan-Derivaten und einem oder mehreren anderen Lanthaniden, ausgewählt unter Praseodym, Neodym, Promethium, Samarium, Europium, Gadolinium, Terbium, Dysprosium, Holmium, Erbium, Ytterbium, Thulium, Lutetium und Yttrium;

— Gemisch von Derivaten des Praseodyms und einem oder mehreren anderen Lanthaniden, ausgewählt unter Neodym, Promethium, Samarium, Europium, Gadolinium, Terbium, Dysprosium, Holmium, Erbium, Ytterbium, Thulium, Lutetium und Yttrium;

— oder Gemisch von Derivaten des Neodyms und einem oder mehreren anderen Lantheniden, ausgewählt unter Promethium, Samarium, Europium, Gadolinium, Terbium, Dysprosium, Holmium, Erbium, Ytterbium, Thulium, Lutetium und Yttrium.

5. Verfahren gemäss Anspruch 4, dadurch gekennzeichnet, dass das Cer und/oder das Lanthan und/oder das Praseodym und/oder das Neodym mindestens 40 Mol-% der Gesamtheit der Lanthanide darstellen.

6. Verfahren gemäss einem der Ansprüche 2 bis 5, dadurch gekennzeichnet, dass die organischen Lanthanid-Derivate ausgewählt sind unter:

— den Lanthanidsalzen:

+ der aliphatischen Monocarbonsäuren mit 2 bis 30 Kohlenstoffatomen oder Dicarbonsäuren mit 3 bis 30 Kohlenstoffatomen, die gesättigt sind oder eine oder mehrere ethylenische Doppelbindungen tragen und einen oder mehrere Substituenten tragen können, wie Halogenatome, Hydroxylgruppen, Alkoxygruppen mit 1 bis 12 Kohlenstoffatomen, Mercaptogruppen, Phenyl-, Phenoxy-, Naphthyl- oder Cyclohexylgruppen, deren Ringe gegebenenfalls substituiert sind durch ein oder mehrere Halogenatome, Hydroxylgruppen, Alkylgruppen mit 1 bis 6 Kohlenstoffatomen oder Alkoxygruppen mit 1 bis 6 Kohlenstoffatomen;

+ der Benzoesäure, 1-Naphthoesäure, 2-Naphthoesäure, Cyclopentan-carbonsäure, Cyclohexancarbonsäure, Cyclopenten-carbonsäuren oder Cyclohexen-carbonsäuren, wobei die cyclischen Teile dieser Säuren einen oder mehrere Substituenten tragen können, wie Halogenatome, Hydroxylgruppen, Alkylgruppen mit 1 bis 12 Kohlenstoffatomen, Alkenylgruppen mit 2 bis 12 Kohlenstoffatomen, Alkoxygruppen mit 1 bis 12 Kohlenstoffatomen, Phenyl-, Benzyl-, Phenoxy- oder Cyclohexylgruppen, Alkoxycarbonylgruppen mit 2 bis 24 Kohlenstoffatomen oder Alkenoxycarbonylgruppen mit 4 bis 24 Kohlenstoffatomen;

+ der Alkyl (die Alkylgruppe hat 1 bis 24 Kohlenstoffatome)- oder Alkenyl (die Alkenylgruppe hat 3 bis 24 Kohlenstoffatome)-monoester der vorstehend erwähnten aliphatischen Dicarbonsäuren;

+ der heterocyclischen Carbonsäuren, insbesondere solcher, die abgeleitet sind von Pyridin, Furan, Thiophen, Pyrrol und Pyran, die einen oder mehrere Substituenten tragen können, wie Halogenatome, Hydroxylgruppen, Alkylgruppen mit 1 bis 12 Kohlenstoffatomen, Alkoxygruppen mit 1 bis 12 Kohlenstoffatomen, Alkenylgruppen mit 2 bis 12 Kohlenstoffatomen, Alkoxycarbonylgruppen mit 2 bis 24 Kohlenstoffatomen oder Alkenoxycarbonylgruppen mit 4 bis 24 Kohlenstoffatomen;

— den Lanthanidphenolaten, abgeleitet von Phenol, von Naphthol-1 oder von Naphthol-2, deren cyclische Teile einen oder mehrere Substituenten tragen können, wie Halogenatome, Alkyl- oder Alkoxygruppen mit 1 bis 24 Kohlenstoffatomen, Alkenylgruppen mit 2 bis 24 Kohlenstoffatomen, Phenyl, Benzyl, Phenoxy oder Cyclohexyl;

— den Lanthanidmercaptiden, insbesondere solchen, die sich von Thioglykolsäure oder Thioapfelsäure ableiten, und ihren Alkyl (der Alkylrest hat 1 bis 12 Kohlenstoffatome)-, Alkenyl (der Alkenylrest hat 2 bis 12 Kohlenstoffatome), Phenyl-, Benzyl-, Cyclohexyl-, Alkandiol (mit 2 bis 12 Kohlenstoffatomen)-, Dihydroxybenzol-, Dihydroxycyclohexanestern, wobei die cyclischen Teile dieser Ester durch einen oder mehrere Alkyl- oder Alkoxyreste mit 1 bis 6 Kohlenstoffatomen substituiert sein können;

— den Lanthanidchelaten von β-Dicarbonyl-Verbindungen, insbesondere solchen, die von Verbindungen der allgemeinen Formel (I)

$$R_1—CO—CHR_2—CO—R_3 \quad (I)$$

stammen, worin:

— $R_1$ und $R_3$, die identisch oder verschieden sind, bedeuten:

+ eine lineare oder verzweigte Alkygruppe mit 1 bis 36 Kohlenstoffatomen, gegebenenfalls substituiert durch ein oder mehrere Halogenatome,

+ eine lineare oder verzweigte Alkenylgruppe mit 3 bis 36 Kohlenstoffatomen, gegebenenfalls substituiert durch ein oder mehrere Halogenatome,

+ einen Aryl-Rest oder einen Aryl-Rest, der am aromatischen Ring einen oder mehrere Substituenten trägt, wie

. die Alkylreste mit 1 bis 6 Kohlenstoffatomen, gegebenenfalls substituiert durch ein oder mehrere Halogenatome,

. die Alkenylreste mit 2 bis 6 Kohlenstoffatomen, gegebenenfalls substituiert durch ein oder die Halogenatome,

. die Nitrogruppe,

. die -CHO-Gruppe,

. die -COOH-Gruppe,

. die Alkoxygruppe mit 1 bis 6 Kohlenstoffatomen,

. die -$COOR_4$-Gruppe, wobei $R_4$ ein Alkylrest mit 1 bis 12 Kohlenstoffatomen oder ein Alkenylrest mit 2 bis 12 Kohlenstoffatomen ist,

. die OH-Gruppe,

. die Halogenatome,

+ einen Aralkylrest, dessen aliphatischer Teil 1 bis 12 Kohlenstoffatome trägt und dessen cyclischer Teil einen oder mehrere der vorstehend angegebenen Substituenten tragen kann,

+ einen cycloaliphatischen Rest mit 5 bis 12 Kohlenstoffatomen und dessen cyclischer Teil einen oder mehrere Kohlenstoff-Kohlenstoff-Doppelbindungen beinhalten kann und einen oder mehrere der vorstehend angegebenen Substituenten tragen kann,

+ eine Verkettung mehrerer der vorstehend angegebenen Reste,
wobei die verschiedenen, vorstehend definierten aliphatischen Reste ein oder mehrere Sauerstoff- -O- Atome oder Schwefel- -S- Atome oder Carbonylgruppen -CO- oder Carboxylatgruppen -COO- tragen können;

— $R_2$ ein Wasserstoffatom bedeutet.

7. Verfahren gemäss Anspruch 6, dadurch gekennzeichnet, dass die organischen Lanthanid-Derivate ausgewählt sind unter:

— den Lanthanidsalzen:

+ der aliphatischen Monocarbonsäuren mit 6 bis 24 Kohlenstoffatomen, die gesättigt sind oder eine ethylenische Doppelbindung besitzen und einen oder mehrere Substituenten tragen können, wie Chloratome, Hydroxylgruppen, Alkoxygruppen mit 1 bis 6 Kohlenstoffatomen, Phenyl-, Phenoxy- oder Cyclohexylgruppen, wobei diese cyclischen Gruppen gegebenenfalls substituiert sind durch ein oder mehrere Chloratome, Hydroxylgruppen, Alkyl, oder Alkoxygruppen mit 1 bis 6 Kohlenstoffatomen;

+ der Mercaptomonocarbonsäuren mit 2 bis 6 Kohlenstoffatomen oder Mercaptodicarbonsäuren mit 3 bis 6 Kohlenstoffatomen;

+ der Benzoesäure oder Cyclohexancarbonsäure, deren cyclischer Teil einen oder mehrere Substituenten tragen kann, wie Chloratome, Hydroxylgruppen, Alkyl- oder Alkoxygruppen mit 1 bis 6 Kohlenstoffatomen oder Alkoxycarbonylgruppen mit 2 bis 12 Kohlenstoffatomen;

+ der Alkylmonoester (die Alkylgruppe hat 1 bis 12 Kohlenstoffatome) aliphatischer Dicarbonsäuren mit 4 bis 24 Kohlenstoffatomen, die gesättigt sind oder eine ethylenische Doppelbindung besitzen und einen oder mehrere Substituenten tragen können, wie Chloratome, Hydroxylgruppen, Mercaptogruppen, Alkoxygruppen mit 1 bis 6 Kohlenstoffatomen;

— den Lanthanidphenolaten, abgeleitet von Phenol, dessen Ring einen oder mehrere Substituenten tragen kann, wie Chloratome, Alkyl- oder Alkoxygruppen mit 1 bis 12 Kohlenstoffatomen, Phenyl-, Benzyl-, Phenoxy- oder Cyclohexcylgruppen.

8. Verfahren gemäss einem der Ansprüche 2 bis 5, dadurch gekennzeichnet, dass die anorganischen Lanthanid-Derivate ausgewählt sind unter den Oxiden, Hydroxiden, den Salzen mineralischer Wasserstoffsäuren oder den Salzen mineralischer Sauerstoffsäuren des Lanthanids.

9. Verfahren gemäss Anspruch 8, dadurch gekennzeichnet, dass man als Lanthanidsalze mineralischer Wasserstoffsäuren verwendet: das Chlorid, Bromid, Jodid, Sulfid, Selenid und Tellurid; als Lanthanidsalze mineralischer Sauerstoffsäure: das Sulfit, Sulfat, Sulfonat, Nitrit, Nitrat, Phosphit, Phosphat, Pyrophosphat, Carbonat, Perchlorat, Antimoniat, Arseniat, Selenit, Selenat, Vanadat und Wolframat.

10. Verfahren gemäss einem der Ansprüche 1 bis 9, dadurch gekennzeichnet, dass man zusammen mit der Verbindung auf Lanthanid-Basis mindestens ein Ammonium-, Alkalimetall- oder Erdalkalimetallhalogenid verwendet, ausgewählt unter dem Chlorid, Bromid oder Jodid von Ammonium, Natrium, Kalium, Magnesium, Calcium, Strontium oder Barium.

11. Verfahren gemäss einem der Ansprüche 1 bis 10, dadurch gekennzeichnet, dass man zusammen wirksame Mengen verwendet:

— mindestens einer Verbindung auf Lanthanid-Basis, ausgewählt unter dem Lanthan(III)-stearat, Lanthan(III)-oxid, Lanthan(III)-chlorid, Cer(III)-stearat, Cer(IV)-oxid, Cer(III)-chlorid,

— und wenigstens einem Ammonium-, Alkalimetall- oder Erdalkalimetall-halogenid, ausgewählt unter dem Ammonium-, Natrium- oder Kaliumchlorid, -bromid oder -jodid.

12. Verfahren gemäss einem der Ansprüche 1 bis 11, dadurch gekennzeichnet, dass:

— einerseits die eingesetzte Menge an Verbindung(en) auf Lanthanid-Basis derart bestimmt wird, dass $0{,}1 \times 10^{-4}$ bis $10 \times 0^{-4}$ und vorzugsweise $1 \times 10^{-4}$ bis $5 \times 10^{-4}$ Atom-g Metall, gehörend zur Gruppe der Lanthanide, pro 100 g Polyamid eingebracht werden;

— und andererseits die eingesetzte Menge an Ammonium-, Alkalimetall- oder Erdalkalimetallhalogenid(en) derart bestimmt wird, dass das Verhältnis:

$$\frac{\text{Gesamtzahl der Atom-g Halogen}}{\text{Anzahl der Atom-g des Metalls der Gruppe der Lanthanide}}$$

von 1 bis 20 und vorzugsweise von 5 bis 10 variiert.

13. Verfahren gemäss einem der Ansprüche 1 bis 12, dadurch gekennzeichnet, dass das zu stabilisierende Polyamid ausgewählt ist aus der Gruppe, bestehend aus: den Polyamiden, erhalten durch Polykondensation von gesättigten, aliphatischen Dicarbonsäuren mit 6 bis 12 Kohlenstoffatomen mit gesättigten, aliphatischen, biprimären Diaminen mit 6 bis 12 Kohlenstoffatomen; den Polyaminosäuren, erhalten entweder durch direkte Homopolykondensation von ω-Aminoalkansäuren mit einer Kohlenwasserstoffkette von 4 bis 12 Kohlenstoffatomen, oder durch hydrolytische Öffnung und Polymerisation von Lactamen, abgeleitet von diesen Säuren; den Copolyamiden, erhalten ausgehend von den Ausgangsmonomeren der vorstehend genannten Polyamide; und den Gemischen ähnlicher Polyamide.

14. Stabilisierende Zusammensetzungen zur Verwendung beim Verfahren gemäss einem der Ansprüche 1 bis 13, dadurch gekennzeichnet, dass sie beinhalten:

— wenigstens eine Verbindung auf Lanthanid-Basis, wie sie in den Ansprüchen 2 bis 9, 11 und 12 definiert ist,

— und mindestens ein Ammonium-, Alkalimetall- oder Erdalkalimetallhalogenid, wie in den Ansprüchen 10 bis 12 definiert.

15. Polyamid, wie in Anspruch 13 definiert, stabilisiert nach dem Verfahren gemäss einem der Ansprüche 1 bis 12.

16. Stabilisierte Polyamide gemäss Anspruch 15, dadurch gekennzeichnet, dass sie ausserdem einen oder mehrere Zusätze haben, ausgewählt unter den Füllstoffen, Schlagfestigkeits-Verstärkungsmitteln,

den Schmiermitteln, Plastifizierern, Pigmenten, Netzmitteln, antistatischen Mitteln, Kristallisationsmitteln.

17. Geformte Gegenstände, hergestellt mittels der Polyamide, die gemäss den Ansprüchen 15 oder 16 stabilisiert sind.

## Claims

1. Process for the stabilization of polyamides, characterized by the joint use of effective quantities of at least one lanthanide-based compound and at least one halide of ammonium, alkali metals or alkaline-earth metals (lanthanide is the name given to the metals in the periodic classification of the elements which have atomic numbers ranging from 57 to 71, and yttrium).

2. Process according to Claim 1, characterized in that the lanthanide-based compound consists of:

— an organic or inorganic derivative of any one of the lanthanides: cerium, lanthanum, praseodymium, neodymium, promethium, samarium, europium, gadolinium, terbium, dysprosium, holmium, erbium, ytterbium, thulium, lutetium, and yttrium;

— or a mixture of organic and/or inorganic derivatives of several of these lanthanides.

3. Process according to Claim 2, characterized in that when a derivative of a single lanthanide is considered, the latter is cerium, lanthanum, praseodymium or neodymium.

4. Process according to Claim 2, characterized in that when a mixture of derivatives of several lanthanides is considered, the said mixture consists of the following species:

— a mixture of derivatives of cerium and of one or more of the other lanthanides,

— a mixture of derivatives of lanthanum and of one or more other lanthanides chosen from praseodymium, neodymium, promethium, samarium, europium, gadolinium, terbium, dysprosium, holmium, erbium, ytterbium, thulium, lutetium, and yttrium;

— a mixture of derivatives of praseodymium and of one or more other lanthanides chosen from neodymium, promethium, samarium, europium, gadolinium, terbium, dysprosium, holmium, erbium, ytterbium, thulium, lutetium and yttrium;

— or a mixture of derivatives of neodymium and of one or more other lanthanides chosen from promethium, samarium, europium, gadolinium, terbium, dysprosium, holmium, erbium, ytterbium, thulium, lutetium and yttrium.

5. Process according to Claim 4, characterized in that cerium and/or lanthanum and/or praseodymium and/or neodymium represent at least 40 mole % of the total lanthanides.

6. Process according to any one of Claims 2 to 5, characterized in that the organic lanthanides derivatives are chosen from:

— the lanthanide salts:

+ of monocarboxylic aliphatic acids containing from 2 to 30 carbon atoms or dicarboxylic aliphatic acids containing from 3 to 30 carbon atoms, saturated or containing one or more ethylenic double bonds, and capable of having 1 or more substituents such as halogen atoms, hydroxyl groups, alkoxy groups containing from 1 to 12 carbon atoms, mercapto groups, phenyl, phenoxy, naphthyl or cyclohexyl groups the rings of which are optionally substituted by one or more halogen atoms, hydroxyl groups, alkyl groups containing 1 to 6 carbon atoms or alkoxy groups containing 1 to 6 carbon atoms;

+ of benzoic, 1-naphthoic, 2-naphthoic, cyclopentanecarboxylic, cyclohexanecarboxylic, cyclopentenecarboxylic or cyclohexenecarboxylic acids, the cyclist parts of these acids being capable of having one or more substituents such as halogen atoms, hydroxyl groups, alkyl groups containing 1 to 12 carbon atoms, alkenyl groups containing 2 to 12 carbon atoms, alkoxy groups containing 1 to 12 carbon atoms, phenyl, benzyl, phenoxy or cyclohexyl groups, alkoxycarbonyl groups containing 2 to 24 carbon atoms or alkenyloxycarbonyl groups containing 4 to 24 carbon atoms;

+ of alkyl monoesters (the alkyl group containing 1 to 24 carbon atoms) or alkenyl monoesters (the alkenyl group containing 3 to 24 carbon atoms) of the dicarboxylic aliphatic acids mentioned earlier;

+ of heterocyclic carboxylic acids, particularly of those derived from pyridine, furan, thiophene, pyrrole and pyran, capable of having one or more substituents such as halogen atoms, hydroxyl groups, alkyl groups containing 1 to 12 carbon atoms, alkoxy groups containing 1 to 12 carbon atoms, alkenyl groups containing 2 to 12 carbon atoms, alkoxycarbonyl groups containing 2 to 24 carbon atoms or alkenyloxycarbonyl groups containing 4 to 24 carbon atoms;

— lanthanide phenolates derived from phenol, 1-naphthol or 2-naphthol, the cyclic parts of which may have one or more substituents such as halogen atoms, alkyl or alkoxy groups containing 1 to 24 carbon atoms, alkenyl groups containing 2 to 24 carbon atoms, phenyl, benzyl, phenoxy or cyclohexyl groups;

— lanthanide mercaptides, particularly those derived from thioglycolic or thiomalic acids and from their alkyl esters (the alkyl containing 1 to 12 atoms), alkenyl esters (the alkenyl radical containing 2 to 12 carbon atoms), phenyl, benzyl, cyclohexyl, alkanediol (containing from 2 to 12 carbon atoms), dihydroxybenzene and dihydroxycyclohexane esters, the cyclic parts of these esters being capable of being substituted by one or more alkyl or alkoxy radicals containing from 1 to 6 carbon atoms,

— lanthanide chelates of β-dicarbonyl compounds, particularly those derived from the compounds of general formula (I):

$$R_1—CO—CHR_2—CO—R_3 \qquad (I)$$

in which:

— $R_1$ and $R_3$, which are identical or different, denote:

+ a straight-chain or branched alkyl group containing 1 to 36 carbon atoms, optionally substituted by one or more halogen atoms,

+ a straight-chain or branched alkenyl group containing 3 to 36 carbon atoms, optionally substituted by one or more halogen atoms,

+ an aryl radical or an aryl radical having on the aromatic ring one or more substituents such as:

. alkyl radicals containing 1 to 6 carbon atoms,

optionally substituted by one or more halogen atoms,

. alkenyl radicals containing 2 to 6 carbon atoms, optionally substituted by one or more halogen atoms,

. the nitro group,

. the -CHO group,

. the -COOH group,

. alkoxy groups containing 1 to 6 carbon atoms,

. the $-COOR_4$ groups, $R_4$ being an alkyl radical containing 1 to 12 carbon atoms or an alkenyl radical containing 2 to 12 carbon atoms,

. the OH group,

. halogen atoms,

+ an aralkyl radical the aliphatic part of which contains from 1 to 12 carbon atoms and the cyclic part of which may have one or more of the substituents referred to earlier,

+ a cycloaliphatic radical containing from 5 to 12 carbon atoms and the cyclic part of which may contain one or more carbon-carbon double bonds and have one or more of the substituents referred to earlier,

+ a concatenation of several of the radicals referred to earlier,

the various aliphatic radicals defined earlier being capable of containing one or more -O- oxygen atoms or -S- sulphur atoms or -CO- carbonyl groups or -COO- carboxylate groups;

— $R_2$ denotes a hydrogen atom.

7. Process according to Claim 6, characterized in that the organic lanthanide derivatives are chosen from:

— the lanthanide salts:

+ of monocarboxylic aliphatic acids containing from 6 to 24 carbon atoms, saturated or containing an ethylenic double bond and capable of having one or more substituents such as chlorine atoms, hydroxyl groups, alkoxy groups containing from 1 to 6 carbon atoms, phenyl, phenoxy or cyclohexyl groups, these cyclic groups being optionally substituted by one or more chlorine atoms, hydroxyl groups, or alkyl or alkoxy groups containing 1 to 6 carbon atoms;

+ of mercaptomonocarboxylic acids containing from 2 to 6 carbon atoms or mercaptodicarboxylic acids containing from 3 to 6 carbon atoms;

+ of benzoic or cyclohexanecarboxylic acids, the cyclic part of which may contain one or more substituents such as chlorine atoms, hydroxyl groups, alkyl or alkoxy groups containing 1 to 6 carbon atoms or alkoxycarbonyl groups containing 2 to 12 carbon atoms;

of alkyl monoesters (the alkyl group containing 1 to 12 carbon atoms) of dicarboxylic aliphatic acids containing 4 to 24 carbon atoms, saturated or containing an ethylenic double bond, and capable of having one or more substituents such as chlorine atoms, hydroxyl groups, mercapto groups or alkoxy groups containing 1 to 6 carbon atoms;

— lanthanide phenolates derived from phenol the ring of which may contain one or more substituents such as chlorine atoms, alkyl or alkoxy groups containing 1 to 12 carbon atoms, or phenyl, benzyl, phenoxy or cyclohexyl groups.

8. Process according to any one of Claims 2 to 5, characterized in that the inorganic lanthanide derivatives are chosen from lanthanide oxides, hydroxides, salts of inorganic hydracids and salts of inorganic oxyacids.

9. Process according to Claim 8, characterized in that use is made as lanthanide salts of inorganic hydracids of: the chloride, bromide, iodide, sulphide, selenide and telluride; as lanthanide salts of inorganic oxygen acids: the sulphite, sulphate, sulphonate, nitrite, nitrate, phosphite, phosphate, pyrophosphate, carbonate, perchlorate, antimonate, arsenate, selenite, selenate, vanadate and tungstate.

10. Process according to any one of Claims 1 to 9, characterized in that use is made, jointly with the lanthanide-based compound, of at least one halide of ammonium, alkali metals or alkaline-earth metals, chosen from ammonium, sodium, potassium, magnesium, calcium, strontium or barium chloride, bromide or iodide.

11. Process according to any one of Claims 1 to 10, characterized in that use is made jointly of effective quantities:

— of at least one lanthanide-based compound chosen from lanthanum(III) stearate, lanthanum(III) oxide, lanthanum(III) chloride, cerium(III) stearate, cerium(IV) oxide, and cerium(III) chloride,

— and of at least one halide of ammonium, alkali metals or alkaline-earth metals, chosen from ammonium, sodium or potassium chloride, bromide or iodide.

12. A process according to any one of Claims 1 to 11, characterized in that:

— on the one hand, the quantity of lanthanide-based compound(s) employed is determined so as to contribute from $0.1 \times 10^{-4}$ to $10 \times 10^{-4}$ and, preferably, from $1 \times 10^{-4}$ to $5 \times 10^{-4}$ gram-atoms of lanthanide group metal per 100 g of polyamide;

— and, on the other hand, the quantity of halide(s) of ammonium, alkali metals or alkaline-earth metals employed is determined so that the ratio:

$$\frac{\text{total number of gram-atoms of halogen}}{\text{number of gram-atoms of lanthanide group metal}}$$

varies from 1 to 20 and, preferably, from 5 to 10.

13. Process according to any one of Claims 1 to 12, characterized in that the polyamide to be stabilized is chosen from the group consisting of: the polyamides obtained by polycondensation of saturated dicarboxylic aliphatic acids containing from 6 to 12 carbon atoms with saturated aliphatic diprimary diamines containing from 6 to 12 carbon atoms; the polyaminoacids obtained either by direct homopolycondensation of ω-aminoalkanoic acids bearing a hydrocarbon chain containing from 4 to 12 carbon atoms, or by hydrolytic opening and polymerization of the lactams derived from these acids; the copolyamides obtained from the starting monomers of the abovementioned polyamides; and the mixtures of similar polyamides.

14. Stabilizing compositions for making use of the process according to any one of Claims 1 to 13, characterized in that they comprise:

— at least one lanthanide-based compound as defined in Claims 2 to 9, 11 and 12,

— and at least one halide of ammonium, alkali metals or alkaline-earth metals, as defined in Claims 10 to 12.

15. Polyamide as defined in Claim 13, stabilized by the process according to any one of Claims 1 to 12.

16. Polyamides stabilized according to Claim 15, characterized in that they additionally contain one or more additives chosen from fillers, impact strength improvers, lubricants, plasticizers, pigments, wetting agents, antistatic agents and nucleating agents.

17. Shaped articles prepared with the aid of the polyamides stabilized according to Claim 15 or 16.